# EUROPEAN PATENT APPLICATION

(11) **EP 1 598 109 A2**
(43) Date of publication of application: **23.11.2005**
(21) Application number: 05010633.5
(22) Date of filing: 17.05.2005
(51) Int. Cl.: B01J 21/04, B01J 23/89, B01J 37/02, B01J 37/06

(54) **Process for selective oxidation of carbon monoxide in a hydrogen containing stream**

(30) Priority: 17.05.2004 US 847238
(71) Applicant: ConocoPhillips Company, Bartlesville, OK 74004 (US)
(72) Inventor: Yao, Jianhua, 74006 Bartlesville, OK (US); Kimble, James B., 74006 Bartlesville, OK (US)
(74) Representative: Bublak, Wolfgang

(57) **Abstract**

Provided is a method for preparing a composition comprising admixing a substance comprising platinum and a halide and a substance comprising iron and a halide and incorporating the thus-obtained mixture into or onto an aluminum-containing compound, drying and calcining the incorporated mixture, and then admixing the calcined mixture and an aqueous ammonia solution, and drying and calcining that mixture. The thus-obtained composition is then used in a process for oxidizing carbon monoxide with free oxygen to carbon dioxide.

## Description

The invention relates to the catalytic oxidation of carbon monoxide. In another of its aspects the invention relates to the selective oxidation of carbon monoxide in the presence of hydrogen. In yet another aspect the invention relates to removing as much carbon monoxide as possible, preferably all carbon monoxide, from a stream containing carbon monoxide and hydrogen, particularly, to provide hydrogen feedstock for fuel cells.

The selective oxidation of carbon monoxide in hydrogen-rich streams has been of considerable technical interest for the purification of reformed hydrogen used in feed gas in ammonia synthesis. Recently, this selective oxidation process, sometimes referred to as preferential oxidation, has attracted interest due to the possibility of using this technology in providing suitable hydrogen fuel for fuel cells. Since carbon monoxide is also oxidized to provide carbon dioxide for carbon dioxide lasers, the use of a catalytic composition, which previously had been found useful in the oxidation of carbon monoxide for use in carbon dioxide lasers, has also been investigated for adaptation for use in providing carbon monoxide-free hydrogen for fuel cell feedstock.

A fuel cell is an electrochemical device that enables converting the chemical energy of fuels directly to electricity. A hydrogen-air polymer electrolyte membrane (PEM) fuel cell stack is currently considered the best means for adapting this technology to most uses. The PEM fuel cell is most efficient using gaseous hydrogen for fuel. Use of a fuel processor to generate a hydrogen-rich feedstock at the point of use eliminates problems of storage and distribution of the hydrogen fuel.

A fuel processor can convert fuels such as alcohol, gasoline, liquid petroleum gas, or natural gas to a hydrogen-rich stream. By a process of steam reforming a stream consisting primarily of hydrogen, carbon dioxide and carbon monoxide can be produced, but the product is generally saturated with water. Processing this stream in a shift reactor reduces the carbon monoxide content to provide relatively more hydrogen by means of the well-known water-gas-shift reaction. This reaction provides a product that contains from 0.2 to 2 percent carbon monoxide by volume, which is still sufficient to poison the platinum-based catalytic composition at the PEM anode.

It is an object of this invention to provide a process that is effective for catalytically oxidizing carbon monoxide with oxygen.

It is a further object of this invention to provide a novel method of making a catalytic composition.

In accordance with the present invention, a method is provided for preparing a composition. This method comprises, consists of, or consists essentially of the steps of:
(a) admixing a first substance comprising platinum and a halide and a second substance comprising iron and a halide so as to form a first mixture thereof;
(b) incorporating the first mixture into or onto an aluminum-containing compound so as to form an incorporated mixture;
(c) drying the incorporated mixture so as to form a first dried mixture;
(d) calcining the first dried mixture so as to form a first calcined mixture;
(e) admixing the first calcined mixture and an ammonia-containing solution so as to form a second mixture;
(f) drying the second mixture so as to form a second dried mixture;
(g) calcining the second dried mixture so as to form a second calcined mixture; and
(h) recovering the composition.

In accordance with the second embodiment, this invention a process is provided for the selective oxidation of carbon monoxide to carbon dioxide in a gaseous mixture comprising hydrogen and carbon monoxide. The process comprises, consists of, or consists essentially of:
contacting a feed stream comprising carbon monoxide, hydrogen and oxygen with a composition prepared by the method of the first embodiment in a contacting zone under contacting conditions for a period to produce a product stream comprising less carbon monoxide than the feed stream.

Other objects and advantages of the present invention will become apparent from consideration of the specification and appended claims.

In accordance with the first embodiment of this invention, a method for preparing a composition comprises, consists of, or consists essentially of:
(a) admixing a first substance comprising platinum and a halide and a second substance comprising iron and a halide to form a first mixture;
(b) incorporating the first mixture into or onto an aluminum-containing compound to form an incorporated mixture;
(c) drying the incorporated mixture to form a first dried mixture;
(d) calcining said first dried mixture so as to form a first calcined mixture;
(e) admixing the calcined mixture and an aqueous ammonia solution to form a second mixture;
(f) drying the second mixture to form a second dried mixture;
(g) calcining the second dried mixture so as to form a second calcined mixture; and
(h) recovering the composition.

The preparation of the composition useful in this invention can be carried out by the following method.

The first step in this method involves the admixing of a first substance comprising platinum and a halide and a second substance comprising iron and a halide to form a first mixture thereof. Most preferably, the halide in both the first and second substances is a chloride.

The term "admixing", as used herein denotes mixing components in any order and/or any combination. Any suitable means for admixing the components can be used to achieve the desired dispersion of such components. Examples of suitable admixing include, but are not limited to, mixing tumblers, stationary shelves or troughs, Eurostar mixers which are of the batch or continuous type, impact mixers, and the like.

Preferably, the first substance is chloroplatinic acid and the second substance is ferric chloride.

Then, the first mixture is incorporated into or onto an aluminum-containing compound so as to form an incorporated mixture. Preferably, the aluminum-containing compound is alumina. A preferred method of incorporating is to impregnate using any standard incipient wetness impregnation technique *(i.e.,* essentially completely or partially filling the pores of a substrate material with a solution of the incorporating elements) for impregnating a substrate.

After incorporation, the resulting incorporated mixture is dried in a suitable manner to form a dried incorporated mixture. The incorporated mixture is dried at a temperature of from about 80°C to about 200°C.

The dried incorporated mixture is then calcined to form a calcined incorporated mixture. The calcination temperature is in the range of from about 150°C to about 700°C.

This resulting calcined mixture is then admixed with an aqueous ammonia solution to form a second mixture. Preferably, the second mixture is then heated and then washed with water. The second mixture is then dried and calcined in a suitable manner at the temperature ranges disclosed above. The resulting composition is then recovered. The resulting composition has a molar ratio of platinum to iron that is in the range of from about 0.5:1 to about 4:1.

Before use in the process of oxidizing carbon monoxide the composition can be activated by a reduction step that can be carried out in any suitable manner, preferably at a temperature of about 20□C to about 650□C, more preferably about 200□C to about 500□C for about 0.5 hour to about 20 hours, preferably about 1 hour to about 5 hours to enhance the activity of the catalyst composition for catalyzing a low temperature oxidation of CO with O₂ in the presence of hydrogen. Any reducing gas can be used: hydrogen, CO, paraffins and the like and mixtures thereof. This reduction step leaves at least a portion of the platinum of the composition in a reduced valence state.

According to the second embodiment of this invention the process for oxidizing carbon monoxide in a feed stream that also contains hydrogen and oxygen comprises:
contacting a feed stream comprising carbon monoxide, hydrogen and oxygen with a composition prepared in the first embodiment in a contacting zone under contacting conditions for a period to produce a product stream comprising less carbon monoxide than the feed stream.

The feed stream to the oxidation process can be formed in any suitable manner, such as by mixing the hydrogen that contains carbon monoxide contaminant with the oxygen containing air at any point before or at a point of contact with the composition.

The process for oxidizing a feed containing carbon monoxide and hydrogen gas can be carried out at any temperature and pressure conditions, for any length of time, any gas hourly space velocity and any volume ratio of O₂ to CO that is suitable for selective oxidation of CO in the presence of hydrogen. Generally, the temperature of this process is in a range of about 60°C to about 100°C, preferably in a range of about 65□C to about 90□C, and most preferably in a range of 70□C to 85□C.

The pressure during the oxidation process generally is in the range of about 10 psia to about 1000 psia, preferably 14 psia to 200 psia.

The ratio of moles of O₂ in the feed gas to the moles of CO in the feed gas will generally be in the range of about 0.5 to 8.0 mol O₂/mol CO, preferably 0.5 to 4.0 mol O₂/mol CO, most preferably 0.5 to 1.5 mol O₂/mol CO.

The gas hourly space velocity (cc feed gas per cc catalyst per hour) can be in the range of about 100 to about 200,000, preferably from about 5,000 to about 50,000.

The hydrogen will generally be in the range of about 50-90 volume percent and the inlet CO will generally be in the range of about 0.1 to about 5 volume percent.

The following examples are presented in further illustration of the invention and are not to be construed as limiting the scope of the invention.

### Examples

### Example I (Control)

A 2.90-gram quantity of chloroplatinic acid and a 3.22-gram quantity of ferric chloride were dissolved in 40 mL of water. Half of this solution was then incorporated into 50 grams of calcined alumina. This incorporated mixture was dried at 120°C for 1.5 hours and calcined at 250°C for 4 hours.

### Example II (Inventive)

A 2.6-gram quantity of the composition prepared in Example I was added to 25 grams of a concentrated ammonia solution. This mixture was heated to about 100°C for a few minutes. The mixture was then decanted and washed with water several times. The mixture was dried at 120°C for 1.5 hours and calcined at 250°C for 4 hours.

### Example III (Control)

A 2-gram quantity of the composition prepared in Example I was charged to a ½ inch stainless steel reactor. The composition was reduced at 300°C for two hours with hydrogen flowing through a water bubbler at a rate of 300 cc/minute. After the reduction, the reactor was cooled to room temperature and the water bubbler was removed. The reactor was heated to 80°C and then gases were charged to the reactor. The gas flow rate was 518 cc/min. and the gas feed contained 76.3% H₂, 1.0% CO, 19.2% Co₂, and 3.5% air. Table I shows the percent of CO conversion with the amount of time on stream.

**Table I**

| ***Time on Stream (hr)*** | ***CO conv%*** |
|---|---|
| 1 | 96.34 |
| 2 | 94.79 |
| 3 | 94.47 |
| 4 | 94.83 |
| 5 | 93.32 |

### Example IV (Inventive)

A 2-gram quantity of the composition prepared in Example II was charged to ½ inch stainless steel reactor. The composition was reduced and then gases were charged to the reactor in the same manner as in Example III. Table II shows the percent of CO conversion with the amount of time on stream.

**Table II**

| ***Time on Stream (hr)*** | ***CO conv%*** |
|---|---|
| 1 | 92.92 |
| 2 | 95.63 |
| 3 | 95.48 |
| 4 | 95.19 |
| 6 | 95.72 |
| 7 | 96.48 |
| 8 | 95.66 |

As is evident from the above Tables, the catalyst composition used in the inventive process (of Examples II and IV) is more stable than the catalyst composition used in the control process (of Examples I and III).

While this invention has been described in detail for the purpose of illustration, it should not be construed as limited thereby, but intended to cover all changes an modifications within the spirit and scope thereof.

## Claims

1. A method for preparing a composition comprising the steps of:
(a) admixing a first substance comprising platinum and a halide and a second substance comprising iron and a halide to form a first mixture thereof;
(b) incorporating said first mixture into or onto an aluminum-containing compound to form an incorporated mixture;
(c) drying said incorporated mixture so as to form a first dried mixture;
(d) calcining said first dried mixture so as to form a first calcined mixture;
(e) admixing said calcined mixture and an aqueous ammonia solution so as to form a second mixture;
(f) drying said second mixture so as to form a second dried mixture;
(g) calcining said second dried mixture so as to form a second calcined mixture; and
(h) recovering said composition.

2. The method of claim 1, wherein said incorporated mixture and said second mixture are dried in steps (c) and (f), respectively, at a temperature in the range of from about 80°C to about 200°C.

3. The method of claim 1 or 2, wherein, said first dried mixture and said second dried mixture are calcined in steps (d) and (g), respectively, at a temperature in the range of from about 150°C to about 700°C.

4. The method of any of claims 1 to 3, wherein said first substance comprises platinum and a chloride, in particular wherein said first substance is chloroplatinic acid.

5. The method of any of the preceding claims, wherein said second substance comprises iron and a chloride, in particular wherein said second substance is ferric chloride.

6. The method of any of the preceding claims, wherein said aluminum-containing compound is alumina.

7. A process for oxidizing carbon monoxide with free oxygen to carbon dioxide comprises:
contacting a feed stream comprising carbon monoxide, hydrogen, and oxygen with a composition prepared by a method according to any of the preceding claims, in a contacting zone under contacting conditions for a period of time so as to produce a product stream comprising less carbon monoxide than said feed stream.

8. The process of claim 7, wherein at least a portion of the platinum of said composition is in a reduced valence state.

9. The process of claim 7 or 8, wherein prior to said oxidizing, said composition is reduced under reducing conditions which include a temperature in the range of from about 20°C to about 650°C, in particular in the range of from 200°C to 500°C.

10. The process of any of claims 7 to 9, wherein said contacting conditions include a temperature in the range of from about 60°C to about 100°C, in particular in the range of from about 65°C to about 90°C, preferably in the range of 70°C to 85°C.
